# EUROPÄISCHE PATENTSCHRIFT

(11) **EP 1 249 353 B1**
(45) Veröffentlichungstag und Bekanntmachung des Hinweises auf die Patenterteilung: **14.07.2004**
(21) Anmeldenummer: 02090137.7
(22) Anmeldetag: 09.04.2002
(51) Int. Cl.: B43L 19/00, C11D 7/60, C11D 7/20, C11D 17/00

(54) **Reinigungs- und Poliermittel für metallische Oberflächen**
Cleaning and polishing agent for metal surfaces
Agent de nettoyage et de polissage pour des surfaces métalliques

(30) Priorität: 14.04.2001 DE 20106883 U
(43) Veröffentlichungstag der Anmeldung: 16.10.2002
(73) Patentinhaber: Läufer-Werk Aktiengesellschaft, 31303 Burgdorf (DE)
(72) Erfinder: Geltenpoth, Peter, 81549 München (DE)
(74) Vertreter: Grünecker, Kinkeldey, Stockmair & Schwanhäusser

(56) Entgegenhaltungen:
- DE-A- 3 005 298
- US-A- 5 690 539

## Beschreibung

Die Erfindung betrifft ein Reinigungs- und Poliermittel für metallische Oberflächen.

Es ist bekannt, zum Reinigen und Polieren metallischer Oberflächen Suspensionen, Pasten, speziell präparierte Tücher und Stahlwolle zu verwenden.

Tensidische Suspensionen mit abrasiven Zusätzen, wie sie aus der US-A 5 690 539 bekannt sind, werden auf eine zu bearbeitende Fläche aufgetragen, die anschließend einer Behandlung mit Hilfe von Schwämmen, Bürsten oder dgl. unterworfen wird. Pasten neigen zum Eintrocknen und ihr Einsatz ist unbequem, die Verwendung speziell präparierter Tücher macht regelmäßig nur bei Silberwaren einen Sinn, der Einsatz von Stahlwolle birgt das Risiko von Oxidationserscheinungen durch winzige, am gereinigten Gegenstand verbleibende Partikel in sich; in allen Fällen führt ein Arbeiten ohne Handschuhe regelmäßig zu unerwünschten Verschmutzungen der Hände des Benutzers.

Der Erfindung liegt die Aufgabe zugrunde, ein Reinigungs- und Poliermittel der in Betracht gezogenen Art zu schaffen, das unbegrenzt lagerfähig, bequem handhabbar und ohne unerwünschte Nebeneffekte verwendbar ist. Gelöst wird diese Aufgabe erfindungsgemäß dadurch, dass es nach Art eines Radiergummis auf Kautschukbasis mit einem Bimsstein-Anteil von mehr als 50 Gewichtsprozenten ausgebildet ist.

Die Verwendung von Bimssteinmehl in einem Radiergummi ist - wie der DE-A 300 52 98 entnommen werden kann - an sich nicht neu. Der Anteil dieses Materials in bekannten Radiergummiarten liegt indes im Hinblick darauf, dass sie für den Einsatz auf Papier bestimmt sind, jeweils unter 50 %.

Als besonders vorteilhaft erweist es sich, wenn der Kautschukanteil 10 bis 15 Gewichtsprozente und der Bimssteinanteil 60 bis 75 Gewichtsprozente beträgt.

Neben den bereits erwähnten Bestandteilen empfiehlt sich die Beigabe eines Chlorschwefelanteiles von 10 bis 15 %.

## Patentansprüche

1. Reinigungs- und Poliermittel für Metalloberflächen, **dadurch gekennzeichnet, dass** es nach Art eines Radiergummis auf Kautschukbasis mit einem Bimsstein-Anteil von mehr als 50 Gewichtsprozenten ausgebildet ist.

2. Reinigungs- und Poliermittel nach Anspruch 1, **dadurch gekennzeichnet, dass** der Kautschukanteil 10 bis 15 Gewichtsprozente und der Bimssteinanteil 60 bis 75 % Gewichtsprozente beträgt.

3. Reinigungsmittel nach Ansprüche 1 oder 2, **dadurch gekennzeichnet, dass** es einen Chlorschwefelanteil von 10 bis 15 % Gewichtsprozenten aufweist.

## Claims

1. Cleaning and polishing agent for metal surfaces **characterised in that** it is similar in texture to a caoutchouc-based eraser and **in that** it contains more than 50 percent by weight pumice.

2. Cleaning and polishing agent according to claim 1, **characterised in that** it contains 10 to 15 percent by weight caoutchouc and 60 to 75 percent by weight pumice.

3. Cleaning and polishing agent according to claim 1 or 2, **characterised in that** it contains 10 to 15 percent by weight sulphur chloride.

## Revendications

1. Agent de nettoyage et de polissage pour des surfaces métalliques, **caractérisé en ce qu'**il a une composition semblable à celle d'une gomme à base de caoutchouc ayant une teneur en pierre ponce de plus de 50 pour cent en poids.

2. Agent de nettoyage et de polissage selon la revendication 1, **caractérisé en ce qu'**il a une teneur en caoutchouc de 10 à 15 pour cent en poids et une teneur en pierre ponce de 60 à 75 pour cent en poids.

3. Agent de nettoyage et de polissage selon la revendication 1 ou 2, **caractérisé en ce qu'**il a une teneur en chlorure de soufre de 10 à 15 pour cent en poids.
